(19) Europäisches Patentamt
European Patent Office
Office européen des brevets

(11) **EP 4 524 876 A1**

(12) **EUROPEAN PATENT APPLICATION**

(43) Date of publication:
**19.03.2025 Bulletin 2025/12**

(21) Application number: **23198031.9**

(22) Date of filing: **18.09.2023**

(51) International Patent Classification (IPC):
***G06T 3/4053*** (2024.01)

(52) Cooperative Patent Classification (CPC):
**G06T 3/4053**; G06T 2207/10016;
G06T 2207/20084; G06T 2207/30201;
G06T 2207/30252

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Accenture Global Solutions Limited Dublin 4 (IE)**

(72) Inventors:
• **PRASAD MN, Anil**
**560102 Bangalore (IN)**
• **DAM, Joydeep**
**560067 Bangalore (IN)**
• **RAMESH, Bhagirathi**
**560035 Bangalore (IN)**

(74) Representative: **Müller-Boré & Partner Patentanwälte PartG mbB Friedenheimer Brücke 21 80639 München (DE)**

(54) **METHODS AND SYSTEMS FOR GENERATING SUPER RESOLUTION IMAGES**

(57) There is provided methods and systems for generating super resolution images of objects. In particular there is provided a method of generating a super resolution image of an object, the method comprising: receiving a plurality of frames of a video of the object; extracting from the plurality of frames a plurality of images of the object; selecting an image of the plurality of images as a target image; applying a trained model to the plurality of images to generate a super resolution image of the object, wherein the trained model comprises: (a) a correspondence estimation neural network configured to compute a respective optical flow between the target image and each other image of the plurality, and (b) a reconstruction neural network configured to generate a super resolution version of the target image using the plurality of images and the respective optical flows between the target image and each other image of the plurality.

There is also provided a corresponding system, along with systems and methods for training said model.

Figure 1a

**(Cont. next page)**

Figure 1b

**Description**

**Field of the invention**

The present invention relates to methods and systems for generating super resolution images of an object, and in particular using low resolution stills from video of the object.

**Background of the invention**

Video capture and monitoring is being used in many critical applications ranging from vehicle monitoring and traffic enforcement, building and systems access control, warehouse floor monitoring, livestock monitoring and so on. Many of these systems employ a degree of automation and often use computer vision techniques to identify or analyse objects captured on video.

Whilst video capture technology has advanced with increases in video capture resolution there is still often a gap between the available video resolution and that which is required for advanced video analysis techniques. In particular, systems such as automatic number plate recognition, and other systems which rely on identifying and reading text in video images, is highly dependent on having images of sufficient resolution.

Often even with high resolution camera systems the field of view is such that the resolution of individual objects in the video (which may be some distance from the camera) is comparatively low. This low resolution limits what computer vision tasks may successfully be carried out using the video. This is hindered further when individual frames of a video are effected by other characteristics like blur, low-light and so on.

There have been previous attempts to address this issue by upscaling captured video using techniques such as blind deconvolution. These have enjoyed limited success but often do not reach the resolution required for advanced computer vision techniques. Therefore, there is required a method and system that overcomes these problems

**Summary of the invention**

Rather than attempting to upscale an entire video the present invention addresses the above problems by generating a single high resolution (or super resolution) image of an object of interest using multiple frames of video. By upscaling an image of an object, rather than the video as a whole, the information regarding the object present in the multiple frames of video may be combined in a way that takes account of the 3D structure of the object itself. This may be achieved by way of a trained neural network that is trained to calculate the optical flow between two images of objects of a specific type. In this way the features present in each of the multiple frames may be more accurately combined in a manner that is consisted with the object in the image, thus leading to a more accurate super resolution image.

To that end, in a first aspect there is provided a method of generating a super resolution image of an object. The method comprises receiving a plurality of frames of a video of the object; extracting from the plurality of frames a plurality of images of the object; selecting an image of the plurality of images as a target image; and applying a trained model to the plurality of images to generate a super resolution image of the object. The trained model comprises: (a) a correspondence estimation neural network configured to compute a respective optical flow between the target image and each other image of the plurality, and (b) a reconstruction neural network configured to generate a super resolution version of the target image using the plurality of images and the respective optical flows between the target image and each other image of the plurality. Typically, the correspondence estimation network is trained for the object type of the object.

In some embodiments of the first aspect the step of extracting comprises applying a trained object detector to the plurality of frames. Preferably, the trained object detector is a You Only Look Once (YOLO) type detector, such as YOLOX. However, the trained object detector may comprise any one of the following algorithms: Faster R-CNN; Fast R-CNN; Single Shot Detector (SSD); EfficientDet; CenterNet; Cascade R-CNN; Detection Transformer (DETR). Optionally, the step of extracting further comprises applying a trained object tracker to identify the same object in each frame from a plurality of objects in one or more frames having a common object type.

Preferably, the correspondence estimation network is a Recurrent All-Pairs Field Transforms (RAFT) neural network

In a second aspect there is provided a method of training a model (such as the model of the first aspect) for generating super resolution images of an object type. As before the model comprises a correspondence estimation network and a reconstruction network. The method comprises: obtaining a set of training data for an object of the object type, the set of training data comprising a plurality of images of the object at different viewpoints and optical flow fields between pairs of images of the plurality; training the correspondence estimation network using the set of training data, and obtaining a trained reconstruction network.

Preferably, the correspondence estimation network is a Recurrent All-Pairs Field Transforms (RAFT) neural network. Optionally, the step of training is carried out using a loss function comprising norms of the differences between the optical flows calculated by correspondence estimation network for pairs of images in the set of training data and the corresponding optical flows in the set of training data. For example, the loss function may take the form

$$\lambda(I, I') = \sum_{i=1}^{N} \gamma^{N-i} \left\| f_{\text{gt}}(I, I') - f_i(I, I') \right\|_{L1}$$

where $f_{\text{gt}}(I, I')$ is the optical flow field in the set of training data for a pair of images $(I, I')$ of the set of training data, $f_i(I, I')$ is the RAFT or calculated optical flow field at the ith iteration of $N$ total iterations for the pair of images $(I, I')$ and $\gamma < 1$.

In some embodiments of the second aspect the step of obtaining a set of training data comprises: generating, from a digital 3D model of the object of the object type, a plurality of images of the object at respective different viewpoints; and calculating, using the 3D model, for a plurality of pairs of the images, a respective optical flow field between the images of the pair.

In some embodiments of the second aspect the step of obtaining a trained reconstruction network comprises: training the reconstruction network using a further set of training data, the further set of training data comprising one or more images of an object of the object type at the super resolution and a plurality of images of the object at resolutions lower than the super resolution. Optionally, images in the further set of training data are generated from the images in the initial set of training data. Preferably, training the reconstruction network uses the trained correspondence estimation algorithm to compute respective optical flow fields between pairs of the images in the further set of training data.

In some embodiments of the second aspect the step of obtaining a trained reconstruction network comprises receiving a pre-trained reconstruction network.

Preferably, in embodiments of the first or second aspects, the reconstruction neural network comprises a recurrent back projection network. Typically, the reconstruction network is trained using a loss function comprising a mean squared error loss component and an image perceptual loss component.

In embodiments of the first or second aspects, the object type is any one of: license plate; face; billboard; sign.

The invention also provides apparatus corresponding to, and comprising elements, modules or components arranged to put into effect the above methods, for example one or more various suitably configured computing devices.

In particular, in a third aspect the invention therefore provides a system for generating a super resolution image of an object, the system comprising a memory, and one or more processors arranged to carry out a method comprising receiving a plurality of frames of a video of the object; extracting from the plurality of frames a plurality of images of the object; selecting an image of the plurality of images as a target image; applying a trained model to the plurality of images to generate a super resolution image of the object. The trained model comprising: (a) a correspondence estimation neural network configured to compute a respective optical flow between the target image and each other image of the plurality, and (b) a reconstruction neural network configured to generate a super resolution version of the target image using the plurality of images and the respective optical flows between the target image and each other image of the plurality.

In a fourth aspect the invention provides a system for training a model for generating super resolution images of an object type. The model comprising a correspondence estimation network and a reconstruction network. The system comprising a memory, and one or more processors arranged to carry out a method comprising obtaining a set of training data for an object of the object type, the set of training data comprising a plurality of images of the object at different viewpoints and optical flow fields between pairs of images of the plurality; training the correspondence estimation network using the set of training data, and obtaining a trained reconstruction network.

The invention also provides one or more computer programs suitable for execution by one or more processors, such computer program(s) being arranged to put into effect the methods outlined above and described herein. The invention also provides one or more computer readable media, and/or data signals carried thereon storing such computer programs.

## Brief description of the drawings

Embodiments of the invention will now be described, by way of example only, with reference to the accompanying drawings, in which:

Figure 1 illustrates a situation where a video is captured of a given scene and a super resolution image is obtained from the video using a super resolution system;

Figure 1b shows a variant of the super resolution system shown in figure 1a;

Figure 2a is a flow diagram of a method of generating a super resolution image of an object, such as may be used with the super resolution system described in relation to figures 1a and 1b;

Figure 2b is a flow diagram of a variant of the step of extracting a plurality of images from the method discussed in relation to figure 2a;

Figure 3 schematically illustrates an example of a computer system which may be used to implement systems of the invention, such as the super resolution system;

Figure 4 schematically illustrates the structure of a trained neural network that may be used with the reconstruction module of super resolution system;

Figure 5 is a flow diagram of a method of training a model for generating super resolution images of an object type, such as may be used with the super resolution system;

Figure 6 is a flow diagram of a method of generating a set of training data for training a correspondence estimation network.

Figure 7 shows an example of a super resolution image generated using the systems and methods described herein.

## Detailed description of embodiments of the invention

In the description that follows and in the figures, certain embodiments of the invention are described. However, it will be appreciated that the invention is not limited to the embodiments that are described and that some embodiments may not include all of the features that are described below. It will be evident, however, that various modifications and changes may be made herein without departing from the broader spirit and scope of the invention as set forth in the appended claims.

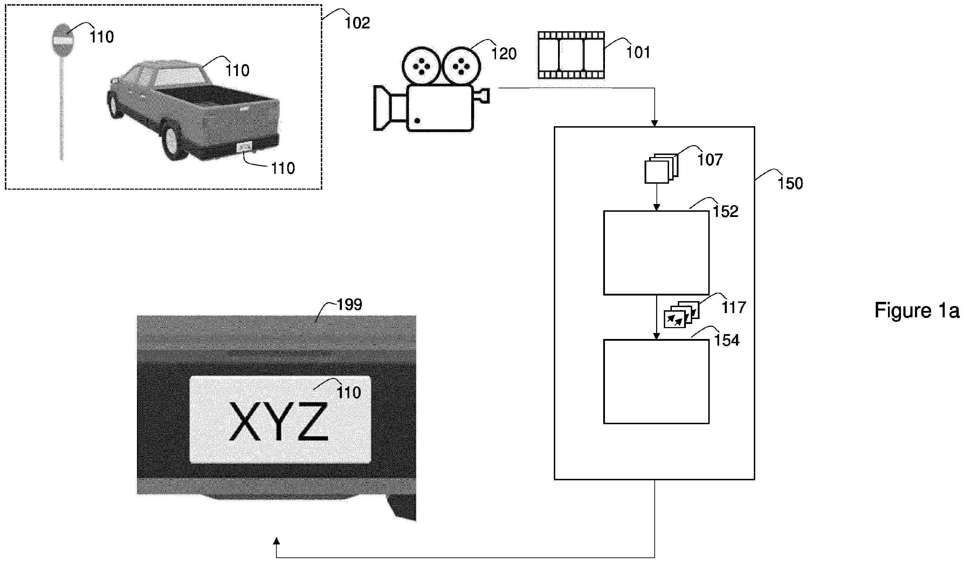

Figure 1a illustrates a situation where a video 101 is captured of a given scene 102. The video is captured by a camera 120. The scene comprises one or more objects 110. These objects 110 may be in motion. Similarly, the viewpoint of the camera 120 may change (such as due to a change in position and/or direction of the camera). As such, the objects 110 in the scene may move in the resulting video 101. In particular, the objects 110 may present different aspects during the video 101. In other words, the objects 110 may be viewed from different direction (or viewpoints) during the video 101.

In the example shown in figure 1a the scene comprises three objects 110 which are, a road sign 110, a vehicle 110, and a licence plate of the vehicle 110. As such, it will be appreciated that an object may itself be part of (or an element of) another object.

The video 101 has (or is captured at) a particular image resolution. As such the video may be thought of as sequence of still images (or frames) at a given resolution. In the situation illustrated in figure 1a a super resolution image of one more of the objects is required. A super resolution image 199 is an image that is at a higher resolution than the image (or images) from which it is generated. In this case a super resolution image 199 is an image at a greater resolution than the resolution of the video 101.

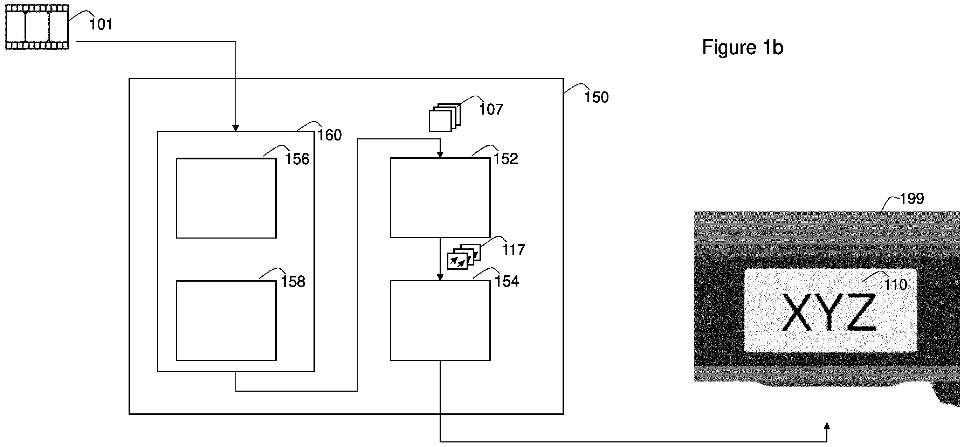

A system 150 (or super resolution system) is arranged to receive (or otherwise obtain) the video 101 (or frames thereof). The system 150 is arranged to extract (or generate) a plurality of images 107 of an object of interest. The object of interest is one of the objects 110 in the scene 102. The object of interest may be selected (or chosen) by a user. Additionally, or alternatively the object of interest may be selected automatically based on the object type. For example, the system 150 may be arranged to automatically select an object of a predetermined object type (such as automatically selecting any licence plate in the video 101). In the example shown in figure 1 the object of interest is the license plate 110.

Each image of the plurality of images 107 corresponds (or is generated from) a respective frame of the video 101. It will be appreciated that in some cases there are frames of the video in which the object of interest does not appear. In that case an image is not generated from said frame. As such, some frames of the video may not have an associated (or corresponding) image.

Typically, each image of the plurality of images 107 is a cropped version (or is cropped from) the corresponding frame of the video 101. In particular, the frame may be cropped to a bounding box around the object to produce (or generate) the image. As described shortly below the system 150 may use various object detection and/or object tracking algorithms to generate the plurality of images. Typically, the object of interest is centred in each image.

One of the plurality of images 107 is selected as a target image. The target image may be selected by a user of the system 150. Alternatively, the target image may be selected automatically by the system 150. The target image may be selected based on number of criteria including any one of more of: a size of the object in the corresponding frame; the orientation of the object in the frame; the frame (or image) number in the sequence of frames (or images); and so on.

The system 150 comprises a correspondence module 152. The correspondence module is arranged to receive (or otherwise obtain) the plurality of images 107. The correspondence module 152 comprises a trained neural network that is arranged to calculate (or generate or otherwise compute) an optical flow between two images. As would be understood by the skilled person, an optical flow between two images encodes (or represents or otherwise indicates) the relative motion between common parts (or elements) of two images. Typically, an optical flow is represented (or takes the form of) an optical flow field which is (or comprises) a vector field corresponding to (or representing) the apparent motion of elements (usually pixels) of an image between the image and a subsequent image. The trained neural network of the correspondence module may advantageously be trained using training data that corresponds to same object type and the object of interest. In this way the trained neural network of the correspondence module may be thought of as structurally aware of the object type. As such the trained neural network calculates the optical flow taking into account the 3D structure of the object.

The correspondence module 152 is arranged to use the trained neural network to generate a set of optical flows 117 for the plurality of images 107. The set of optical flows comprises respective optical flows between the target image and each other image of the plurality of images 107.

The system 150 further comprises a reconstruction module 154. The reconstruction module is arranged to receive (or otherwise obtain) the plurality of images 107 and the set of optical flows 117. The reconstruction module 154 comprises a further trained neural network. The further trained neural network is arranged to operate on the plurality of images 107 and the set of optical flows 117 to generate a super resolution version of the target image. Typically, the further trained neural network is configured to operate on a plurality of pairs of images, each pair of images comprising the target image and a respective one other image of the plurality of images 107. As described shortly in more detail below the further trained neural network may comprise a plurality of rounds, where each round takes as input output from a previous round and a respective pair of images and the corresponding optical flow between the pair of images.

In the example illustrated in figure 1a a video 101 is taken of a scene where a vehicle 110 travels past a no entry sign 110. In the video the license plate of the vehicle is not readable on any single frame due to the resolution of the video. A super resolution image of the licence plate is therefore required. The system 150 generates a plurality of images 107 of the licence plate from the video 101. The image of the license plate that is square to the camera viewpoint is chosen by the user as the target image. The correspondence module calculates optical flow fields for each pair of the target image and other images of the plurality of images 107. The neural network of the correspondence module 152 has been trained with a data set containing pictures of various license plates, and as such the trained neural network is aware of the 3D structure of license plates.

The optical flow fields and the plurality of images 107 are provided to the reconstruction module 154 which uses the further trained neural network to generate the super resolution target image 199 of the licence plate 110. In this super resolution image 199 the number on the license plate is discernible (or readable). It will be appreciated that, because the trained neural network of the correspondence module 152 is structurally aware of the object type of licence plates the optical flow fields 117 generated implicitly take account of the specific 3D structure of the object type of a license plate. This in turn allows the reconstruction module 154 to generate a more accurate higher resolution image 199.

Whilst herein it is assumed that a video comprises a sequence of still images (or frames) it will be appreciated that this is for ease of discussion. It will be understood that some video formats may store the video data as a sequence of differences between one image frame and the next. It will be understood however that in all such cases still frames of the video are nevertheless obtainable and represent the images displayed on a screen by the video at any instant.

Figure 1b shows a variant of the system 150 shown in figure 1a. Common reference numerals are used to indicate similarity and the description above on figure 1a applies to figure 1b except where noted below.

System 150 comprises an image generation module 160. The image generation module 160 is arranged to generate the plurality of images 107 of a given object from the video 101. The image generation module comprises an object detection module 156.

The object detection module 156 is arranged to detect (or indicate or otherwise identify) one or more objects in a frame of a video (or an image). Typically, the object detection module 156 is arranged to generate a bounding box around (or other indication of a region) around each object detected in a frame. The object detection module 156 may be arranged to detect only a given type of object. Alternatively, the object detection module may be arranged to detect a plurality of types of object, in which case the object detection module 156 may be further arranged to tag (or otherwise identify) the object type of each object detected. Object detection and object detection algorithms would be well known to the skilled person so will not be discussed further herein. It will be appreciated that a suitable object detection algorithm for the object detection module would be the YOLOX, a YOLO (You only look once) type object detection algorithm described in detail in "YOLOX: Exceeding YOLO Series in 2021" Ge et al. 2017, arXiv:2107.08430; https://doi.org/10.48550/arXiv.2107.08430. The YOLOX algorithm provides object detection for multiple object types along with object tagging. Other suitable object detection algorithms include any of: Faster R-CNN; Fast R-CNN; YOLOv4; Single Shot Detector (SSD); EfficientDet; CenterNet; Cascade R-CNN; and Detection Transformer (DETR).

Where multiple objects are detected in a video 101 the object of interest may be selected by a user. Alternatively, the object of interest may be selected automatically, such as selecting the object in accordance with a pre-defined object type. For example, for a licence plate recognition system the image generation module 160 may be arranged to select a detected licence plate in any video 101. In another example, say for an automated entry system, the image generation module 160 may be arranged to select a detected face in any video 101, and so on.

The image generation module 160 may be arranged to generate images of the selected object from the video. As set out above, this may comprise cropping (or otherwise limiting) frames in which the object was detected, to (or based on) on the region indicated by the object detection module 156.

It will be understood that in some scenarios it may be expected that more than one object of a given type may be present in a video 101. For example, where the video 101 is of a toll plaza, multiple vehicles, and therefore multiple license plates, may be visible in some frames of the video 101. As such, the image generation module 160 may further comprise an image tracking module 158.

The image tracking module 158 is arranged to receive indications of detected objects from the object detection module. Typically, the indications are in the form of bounding boxes for each frame indicating where the detected object is. As discussed above in the case where multiple object types are detected the indications may also comprise an indication of the object type.

The image tracking module 158 is arranged to track one or more detected objects through video 101 (or the sequence of frames of the video 101). Typically, the image tracking module is arranged to further tag (or indicate) an object identifier for one or more objects in the frames, such that the same object receives the same identifier in each frame in which the object appears. As such a particular object (or instance of a common object type) may be uniquely identified in each frame in which the particular object appears, even if other objects of a common object type are present in the frame. The image generation module 160 may be arranged to generate images of the selected object from these further tagged frames. This enables, for example, images of a specific license plate alone to be generated from video in which a number of different license plates appear. It will be appreciated that a suitable object detection algorithm for the object detection module would be ByteTrack object tracking algorithm described in detail in "ByteTrack: Multi-Object Tracking by Associating Every Detection Box" Yang et al. 2022, arXiv:2110.06864; https://doi.org/10.48550/arXiv.2110.06864. This particular algorithm integrates the YOLOX object detection algorithm discussed above. Other suitable object tracking algorithms include any of: SORT; Deep SORT; FairMOT; TransMOT; Tracktor; SiamRPN++ and the like.

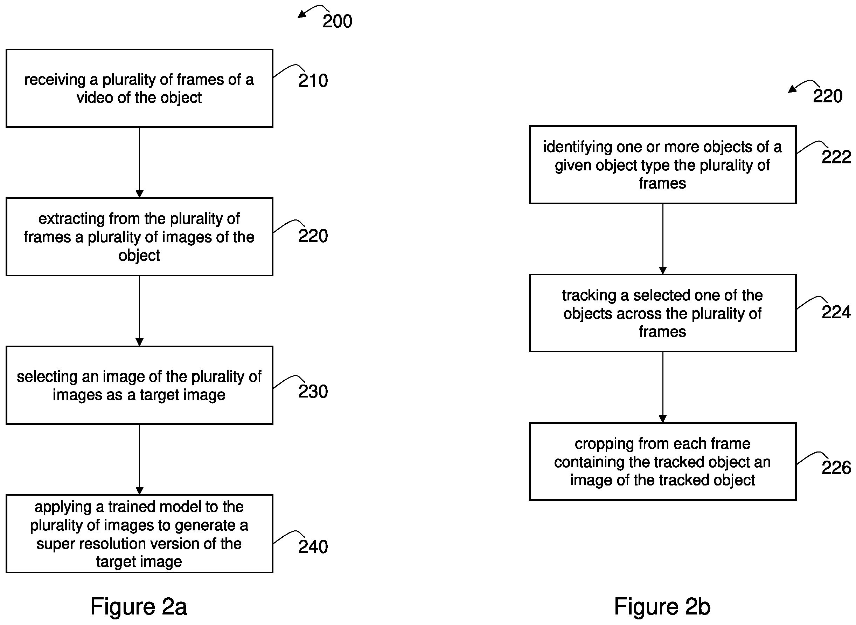

Figure 2a is a flow diagram of a method of generating a super resolution image of an object, such as may be used with the system 150 described above in relation to figures 1a and 1b.

At a step 210 the system 150 receive a plurality of frames of a video 101 of the object 110. As discussed above the plurality of frames may be reived in the form of the video itself. The plurality of frames may be received directly from a video camera capturing the video 101 (such as in the form of a video stream). Additionally, or alternatively the plurality of frames may be reived from an intermediate system or storage and may relate to a video 101 recorded previously and stored for later analysis.

At a step 220 a plurality of images 107 of the object 110 are extracted from the plurality of frames. Each image of the plurality of images 107 corresponds (or is generated from) a respective frame of the video 101. It will be appreciated that in some cases there are frames of the video in which the object of interest does not appear. In that case an image is not generated from said frame. As such, some frames of the video may not have an associated (or corresponding) image.

At a step 230 an image of the plurality of images is selected as a target image. Said selection may be done by a user, or may be done automatically based on one or more pre-defined criteria as described above.

At a step 240 a trained model is applied to the plurality of images to generate a super resolution image of the object. In particular the super resolution image of the object is an upper (or higher) resolution version of the target image. The trained model comprises the trained neural network of the correspondence module 152 and the further trained neural network of the reconstruction module. As such, the step 240 comprises computing respective optical flows between the target image and each other image of the plurality by the correspondence module. The step 240 further comprises generating, by the reconstruction module 154, the super resolution version of the target image using the plurality of images and the respective optical flows between the target image and each other image of the plurality.

It will be appreciated that the super resolution image 199 may be displayed (or otherwise presented) to a user and/or provided to a further system for further processing. Examples of such further processing include any one or more of: facial (or biometric) identification (such as where the object is a face or a person); optical character recognition (such as where text appears on the object).

As will be appreciated the further processing can depend on the use of the super-resolution image (or images). Examples of uses include any of the following.

- Upscaling low-resolution videos of a VCR system or any other surveillance system, such as for use in video forensics.
- Low-Light Video Enhancement: Improvising video footage captured in low-light conditions. In this way such video may be made suitable for various applications such as security and/or surveillance. Similarly, super resolution images may be used to improvise video footage in noisy conditions. This may be done by using object inputs from multiple images to obtain improved images.
- Remote Sensing/Satellite sensing: Enhancing details in satellite or drone footage, such as to improve the reconstruction of structures.
- Medical Imaging of non-deformable and/or semi-deformable structures during laparoscopic investigation.
- Industrial Quality Control: Enhancing details in image of manufacturing processes, such as to aid in detecting of defects to ensuring product quality.
- Agricultural Monitoring: Use of super resolution images in any of leaf detection, fruit detection, or disease detection.
- Road sign detection for autonomous navigation.
- Archaeological Exploration: Enhancing footage captured in archaeological digs to extract further information about artifacts and historical sites.

- Underwater Surveillance: Improving the quality of underwater video footage, aiding in marine research, conservation efforts, and/or underwater security applications.
- Search and Rescue Operations: Enhancing video feeds from drones or cameras in search and rescue missions to better identify individuals or objects in challenging environments.

Figure 2b is a flow diagram of a variant of the step 220 of extracting a plurality of images from the method 200 discussed above in relation to figure 2a. In this variant, which may be carried out by the variant system discussed above in figure 1b, the step 220 comprises the following sub steps.

At a step 222 one or more objects of a given object type are identified (or detected) in the plurality of frames of the video 101. The step 222 may be carried out by the object detection module 156 described above. The step 222 may comprise an object detection algorithm being applied to each frame of the video 101 and thereby detecting all objects in the frames. The step 222 may comprise tagging each identified object with the corresponding object type. In the step 222 a region (or bounding box or other indication of location) is provided for the detected object in each frame in which the object is detected.

At an optional step 224 a selected one of the detected objects is tracked across the plurality of frames. The step 224 may be carried out by the object tracking module 158 described above. The selection of the object may be done by a user. Alternatively, the selection may be carried out automatically based on one or more pre-defined criteria as described previously.

Where a single object is detected in the step 222, at a step 226 a respective image of the object may be cropped from each frame containing the object. Alternatively, where multiple objects of the same type are detected in the step 222, at a step 226 a respective image of the tracked object may be cropped from each frame containing the tracked object as such, at a step 226 a plurality of images of an object 117 are generated from the video 101. The step 226 may further comprise centring the object in the respective images. Typically, the images are cropped using a bounding box around the object generated in the step 222 by the object detection algorithm.

In this way it can be ensured that the plurality of images feature the same object, and as such are suitable for the subsequent calculation of optical flow between pairs of images. This further ensures that ambiguous or conflicting features from different instance of the same object type are not provided in the images provided to the image reconstruction module, thereby maintaining the accuracy of the generated super resolution image of the object.

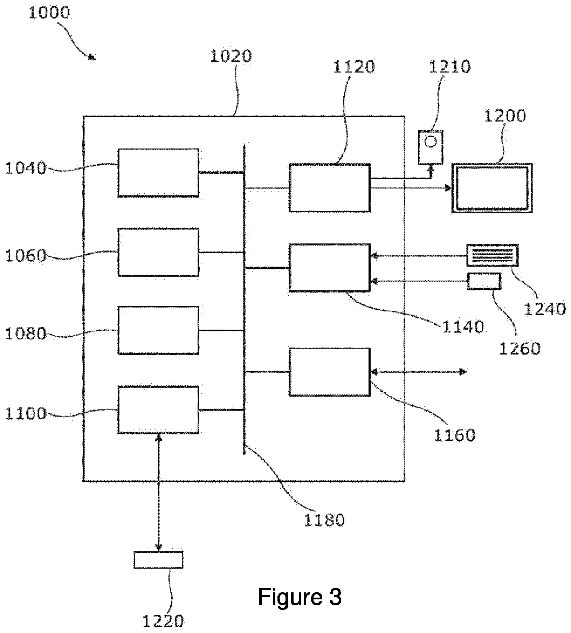

Figure 3 schematically illustrates an example of a computer system 1000 which may be used to implement systems of the invention, such as the system 150 described above. The system 1000 comprises a computer 1020. The computer 1020 comprises: a storage medium 1040, a memory 1060, a processor 1080, an interface 1100, a user output interface 1120, a user input interface 1140 and a network interface 1160, which are all linked together over one or more communication buses 1180.

The storage medium 1040 may be any form of non-volatile data storage device such as one or more of a hard disk drive, a magnetic disc, an optical disc, a ROM, etc. The storage medium 1040 may store an operating system for the processor 1080 to execute in order for the computer 1020 to function. The storage medium 1040 may also store one or more computer programs (or software or instructions or code).

The memory 1060 may be any random access memory (storage unit or volatile storage medium) suitable for storing data and/or computer programs (or software or instructions or code).

The processor 1080 may be any data processing unit suitable for executing one or more computer programs (such as those stored on the storage medium 1040 and/or in the memory 1060), some of which may be computer programs according to embodiments of the invention or computer programs that, when executed by the processor 1080, cause the processor 1080 to carry out a method according to an embodiment of the invention and configure the system 1000 to be a system according to an embodiment of the invention. The processor 1080 may comprise a single data processing unit or multiple data processing units operating in parallel or in cooperation with each other. The processor 1080, in carrying out data processing operations for embodiments of the invention, may store data to and/or read data from the storage medium 1040 and/or the memory 1060.

The interface 1100 may be any unit for providing an interface to a device 1220 external to, or removable from, the computer 1020. The device 1220 may be a data storage device, for example, one or more of an optical disc, a magnetic disc, a solid-state-storage device, etc. The device 1220 may have processing capabilities - for example, the device may be a smart card. The interface 1100 may therefore access data from, or provide data to, or interface with, the device 1220 in accordance with one or more commands that it receives from the processor 1080.

The user input interface 1140 is arranged to receive input from a user, or operator, of the system 1000. The user may provide this input via one or more input devices of the system 1000, such as a mouse (or other pointing device) 1260 and/or a keyboard 1240, that are connected to, or in communication with, the user input interface 1140. However, it will be appreciated that the user may provide input to the computer 1020 via one or more additional or alternative input devices (such as a touch screen). The computer 1020 may store the input received from the input devices via the user input interface 1140 in the memory 1060 for the processor 1080 to subsequently access and process, or may pass it straight to the processor 1080, so that the processor 1080 can respond to the user input accordingly.

The user output interface 1120 is arranged to provide a graphical/visual and/or audio output to a user, or operator, of the system 1000. As such, the processor 1080 may be arranged to instruct the user output interface 1120 to form an image/video signal representing a desired graphical output, and to provide this signal to a monitor (or screen or display unit) 1200 of the system 1000 that is connected to the user output interface 1120. Additionally or alternatively, the processor 1080 may be arranged to instruct the user output interface 1120 to form an audio signal representing a desired audio output, and to provide this signal to one or more speakers 1210 of the system 1000 that is connected to the user output interface 1120.

Finally, the network interface 1160 provides functionality for the computer 1020 to download data from and/or upload data to one or more data communication networks.

It will be appreciated that the architecture of the system 1000 illustrated in figure 3 and described above is merely exemplary and that other computer systems 1000 with different architectures (for example with fewer components than shown in figure 1 or with additional and/or alternative components than shown in figure 1) may be used in embodiments of the invention. As examples, the computer system 1000 could comprise one or more of: a personal computer; a server computer; a mobile telephone; a tablet; a laptop; other mobile devices or consumer electronics devices; etc.

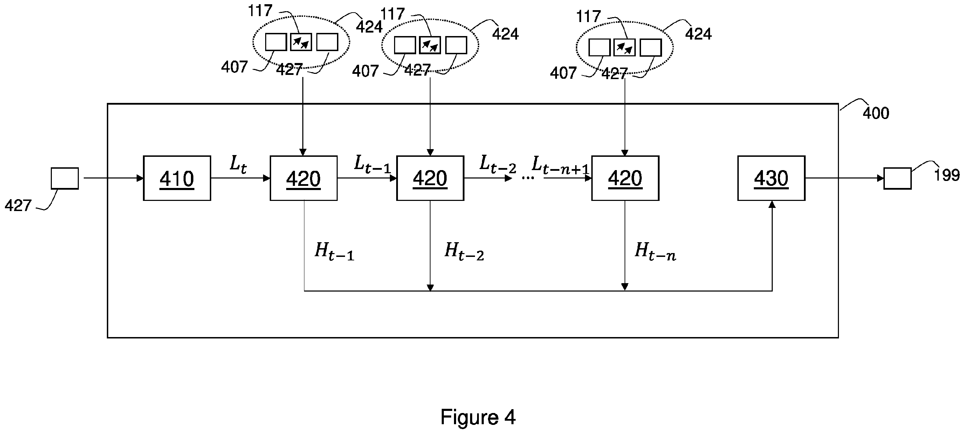

Figure 4 schematically illustrates the structure of a trained neural network 400 that may be used with the reconstruction module 154 of system 150.

The trained neural network 400 comprises an initial transformation 410 block which takes as input the target image 427. The initial transformation block is arranged to generate a set of low resolution features (typically in the form of a feature tensor $L$) for the target image (indicated by the subscript $t$).

Each round 420 is configured to take as input the set of low resolution features output from the previous round (or the set of low resolution features for the target image in the case of the first round 420) along with another input 424 comprising: a pair of images comprising the target image 427 and one other image 407 of the plurality of images 107, and the optical flow 117 corresponding to the pair of images. The subscripts for each round count back from $t$ and assume that there are $n$ images, though it will be appreciated that this choice of labelling is arbitrary. For each round 420 a different one other image is provided in the input 424. Each round generates as output a set of high resolution features (typically in the form of a feature tensor $H$) based on the residual between a single image super resolution upscaling using the input the set of low resolution features, and a multiple image super resolution upscaling using the input pair of images and the optical flow. Each round also generates an updated set of low resolution features based on the output set of high resolution features, for use an input to the subsequent round.

The trained neural network comprises a convertor 430 block which converts (or aggregates or otherwise convolves) all of the sets of high resolution features of the previous rounds 420 into a high resolution (or super resolution) version of the target image 199.

A specific example of a neural network of this kind is the Recurrent Back Projection Network (RBPN) of which further details may be found in *"Recurrent BackProjection Network for Video Super-Resolution"* Haris et al., 2019, arXiv:1903.10128, https://doi.org/10.48550/arXiv.1903.10128. Use of this network was found to be particularly advantageous in the present invention. However, it will be appreciated that other neural networks may be used, such as Task-OrientedFlow (TOFlow).

As set out in the description above the reconstruction module 154 and the correspondence module 152 use (or comprise) respective trained neural networks. It will be understood that these neural networks can be trained independently as they have distinct input and outputs. As mentioned, the reconstruction module 154 typically uses a recurrent back projection neural network. This can be trained using publicly available training sets such as the Vimeo-90k dataset (described in Xue, T., Chen, B., Wu, J. et al. Video Enhancement with Task-Oriented Flow. Int J Comput Vis 127, 1106-1125 (2019). https://doi.org/10.1007/s11263-018-01144-2). Other suitable training data sets that would be known to the skilled person include VideoLQ, Inter4K, the realistic and dynamic scenes (REDS) dataset, the Quick-Sky-Time (QST) dataset. It is advantageous however to train the neural network for the reconstruction module 154 subsequently to training the neural network for the correspondence module 152, as the correspondence module 152 can then be used to calculate the optical flow between the low resolution images of the training set. It is, however, possible to train the neural network for the reconstruction module 154 completely independently from the correspondence module 152 by using another estimate of optical flow, or by using a dataset which includes optical flow as part of the ground truth.

When training the neural network for the reconstruction module 154 there is a choice of loss functions. In the present invention it was found to be particularly advantageous to use a linear combination of a mean squared error loss function and a perceptual loss function. Here the mean squared error loss comprises the sum of the squared differences between the predicted (or calculated or estimated) super resolution image and the known (or ground truth) high resolution image. In particular, the mean squared error loss may be expressed as:

$$\lambda_{\mathrm{MSE}} = \frac{1}{W\,H} \sum_{x=0}^{W} \sum_{y=0}^{H} \left\| (HR_t^{\mathrm{est}})_{x,y} - (HR_t)_{x,y} \right\|_{L2}$$

Where $HR_t^{\mathrm{est}}$ is the estimated high resolution image t, $HR_t$ is the known (or ground truth) high resolution image $t$, $(I)_{x,y}$ is an operator for the pixel of the subject image $I$ at coordinates $x, y$, and $W, H$ are the width and height in pixels of the images respectively.

The perceptual loss comprises the sum of the squared differences between feature vectors of the predicted (or calculated or estimated) super resolution image and the known (or ground truth) high resolution image. In particular, the perceptual loss may be expressed as:

$$\lambda_{\mathrm{P}} = \frac{1}{P\,Q} \sum_{x=0}^{P} \sum_{y=0}^{Q} \left\| \phi(HR_t^{\mathrm{est}})_{x,y} - \phi(HR_t)_{x,y} \right\|_{L2}$$

Where $HR_t^{\mathrm{est}}$ is the estimated high resolution image $t$, $HR_t$ is the known (or ground truth) high resolution image $t$, $\phi(I)$ is the function that obtains the feature map for image $I$, $\phi(I)_{x,y}$ is an operator for the feature of the feature map of image $I$ at indices $x, y$, and $P, q$ are the dimensions of the feature map produced by $\phi()$. Typically, the feature ma used is the VGG feature map (such as a pre-trained VGG19 network). As such the perceptual loss may be expressed as:

$$\lambda_{\mathrm{P}} = \frac{1}{P_{i,j}\,Q_{i,j}} \sum_{x=0}^{P_{i,j}} \sum_{y=0}^{Q_{i,j}} \left\| VGG_{i,j}(HR_t^{\mathrm{est}})_{x,y} - VGG_{i,j}(HR_t)_{x,y} \right\|_{L2}$$

Where $VGG_{i,j}(I)$ is the function that obtains feature map for image $I$ obtained by the $j$-th convolution (after activation) before the $i$-th maxpooling layer within the VGG network. An example of a loss function of this kind is discussed in "Photo-Realistic Single Image Super-Resolution Using a Generative Adversarial Network" Ledig et al, 2017, arXiv:1609.04802, https://doi.org/10.48550/arXiv.1609.04802. It will be appreciated that the values for $i$ and $j$ may be selected depending upon the desired level of detail. Here higher level VGG feature maps such as those with i=5, j=4 yield improved texture detail when compared to lower level feature maps such as with i=2, j=2. Further discussion of this can be found in "Photo-Realistic Single Image Super-Resolution Using a Generative Adversarial Network" *ibid,* section 3.4 which is incorporated herein by reference.

The loss function may be a linear combination of the MSE loss and the perceptual loss above. In particular, the loss function may be expressed as:

$$\lambda = \alpha \lambda_{\mathrm{MSE}} + \beta \lambda_{\mathrm{P}}$$

Particularly advantageous results were obtained setting $\alpha = 1$ and $\beta = 6 \times 10^{-3}$.

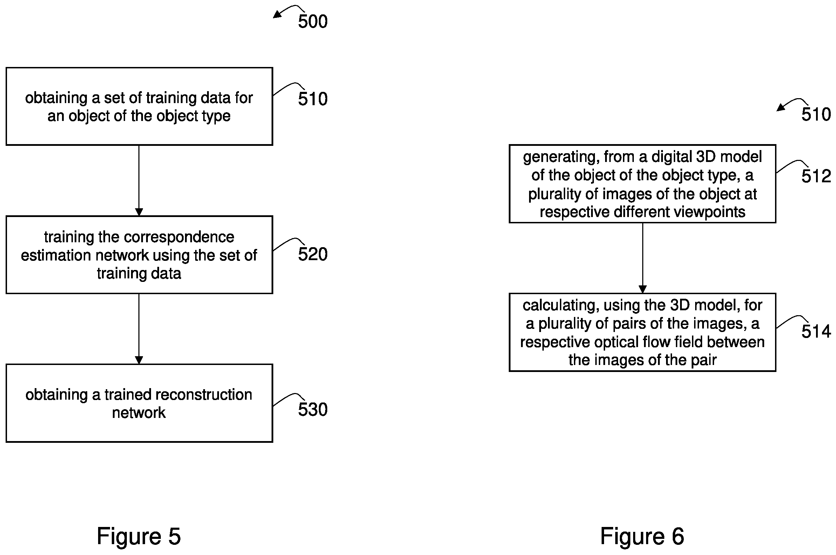

Figure 5 is a flow diagram of a method 500 of training a model for generating super resolution images of an object type, such as may be used with the system 150 described above in relation to figures 1a and 1b. The model comprises a correspondence estimation network, such as the neural network of the correspondence estimate module 152, and a reconstruction network such as the further neural network of the reconstruction module 154.

At a step 510 a set of training data for an object (or objects) of the object type is obtained. The set of training data comprising a plurality of images of the object (or objects) at different viewpoints and optical flow fields between pairs of images of the plurality. The set of training data may be generated by acquiring real images of real objects at different viewpoints. Additionally, or alternatively, as discussed shortly below the set of training data may be synthetic training data. It will be appreciated that the set of training data may be generated prior to the method 500. As such the step of obtaining may comprise retrieving (or receiving) the set of training data from a storage.

It will be appreciated that the set of training data may further comprise publicly available general training data sets for optical flow. Examples of these include the KITTI data set discussed in A Geiger, P Lenz, C Stiller, and R Urtasun. 2013. Vision meets robotics: The KITTI dataset. Int. J. Rob. Res. 32, 11 (September 2013), 1231-1237. https://doi.org/10.1177/0278364913491297. Other suitable training data sets that would be known to the skilled person include: MPI Sintel, FlyingChairs, Spring, and CrowdFlow.

At a step 520 the correspondence estimation network is trained using the set of training data. The correspondence estimation network may be any suitable optical flow neural network such as any of: FlowNet; PWC-Net; FlowNet2; LiteFlowNet2; SpyNet; and so on. Particularly advantageous results were obtained using a RAFT (Recurrent All-Pairs Field Transforms) neural network as the correspondence estimation network. Details of the RAFT neural network are set out in "RAFT: Recurrent All-Pairs Field Transforms for Optical Flow" by Zachary Teed and Jia Deng, 2020, arXiv:2003.12039, https://doi.org/10.48550/arXiv.2003.12039. The RAFT neural network iteratively updates a flow field estimate for a given pair of images towards convergence. Typically, the loss function used when training a RAFT neural network takes account of each iteration of the optical flow field for each pair of images. The loss function may comprise norms of the differences between the optical flows calculated by correspondence estimation network for pairs of images in the set of training data and the corresponding optical flows in the set of training data. For example, the loss function may take the form:

$$\lambda(I, I') = \sum_{i=1}^{N} \gamma^{N-i} \left\| f_{\text{gt}}(I, I') - f_i(I, I') \right\|_{L1}$$

where $f_{\text{gt}}(I,I')$ is the known (or ground truth) optical flow field for a given pair of images $(1,I')$, $f_i(I,I')$ is the RAFT estimated (or calculated) optical flow field at the ith iteration (of $N$ total iterations) for a given pair of images $(I,I')$ and $\gamma$ is a weighting value chosen to be less than 1 such that later iteration are weighted more heavily than earlier iterations. A value of $\gamma$ found to be particular advantageous is 0.8. It will be appreciated that y has similar properties to the convergence rate and the skilled person would select a suitable value based on routine testing.

At a step 530 a trained reconstruction network is obtained, such as the trained neural network 400 of the reconstruction module 154 described above. As discussed above in relation to figure 4 the trained reconstruction network may be trained independently of the correspondence estimation network. As such it will be appreciated that the step 530 may comprise retrieving (or receiving) the trained reconstruction network from storage. The trained reconstruction network may have been trained prior to the method 500, for example using a publicly available data set.

Alternatively, the step 530 may comprise training a reconstruction network (such as a recurrent back projection neural network) to generate the trained reconstruction network. The trained reconstruction network is trained using a further set of training data, the further set of training data comprising one or more images of an object of the object type at the super resolution and a plurality of images of the object at resolutions lower than the super resolution. Training the reconstruction network may comprise using the trained correspondence estimation network to compute respective optical flow fields between pairs of the images in the further set of training data. As such, it will be appreciated that the during the training process the optical flows 117 described above in relation to figure 4 may be calculated (or computed or otherwise generated) by the trained correspondence estimation network.

The further set of training data may comprise publicly available training data as described previously. Additionally, or alternatively, the further set of training data may comprise images generated from the training data obtained in the step 510. In particular, the further training data may comprise the plurality of images of the object (or objects) and downscaled (or low resolution) versions of the plurality of images of the object (or objects). Downscaling of images is known to the skilled person and not described herein.

It will be appreciated that the method 500 may be carried out by any suitable computer system, such as the system 1000 described above in relation to figure 3. The method 500 may be carried out remotely from the system 150 described above. Indeed, the trained model produced by the method 500 may be used in multiple instances of a system 150.

Figure 6 is a flow diagram of a method of generating a set of training data for training a correspondence estimation network. The method may be carried out as part of the step 510 of the method 500 described above in relation to figure 5. The method comprises the following steps.

At a step 512 a plurality of images of the object are generated, from a digital 3D model of the object, at respective different viewpoints. The step of generating may be done using suitable 3D rendering software (such as Blender from the Blender Foundation, https://www.blender.org/). In particular, each image may be generated by placing the virtual camera at a respective point in space (a so-called viewpoint) around the 3D object. The viewpoints may be pre-defined by a user and/or automatically (or procedurally) generated.

At a step 514, for a plurality of pairs of the images, a respective optical flow field between the images of the pair are calculated using the 3D model. It will be appreciated that because the images are generated from a known 3D model at known viewpoints it is possible to determine the optical flow between any pair of images. For example, the optical flow between pairs of images may be calculated based on the texture mapping as corresponding texture pixels in pairs of images may be identified and the optical flow calculated based on their relative displacement. Alternatively, a ray tracing approach may be used to determine the respective optical flow field. In this example the light bounce of the ray tracing algorithm is typically set to zero. Typically, an optical flow is calculated for each pair of images in the plurality of images. The optical flows calculated for the pairs of images serves as the ground truth optical flows for the training data set.

It will be appreciated that using the method 510 above a training set of an arbitrary size may be created for an object. It will also be appreciated that the method 510 above may be repeated for multiple different objects of a given object type in order to generate a diverse training set for a given object type. 3D models for objects of interest may be generated using 3D scanning of real objects and/or by hand. It will also be appreciated that the images generated in the step 514 may be generated at an arbitrarily high resolution. In this way as discussed above in relation to figure 5 the data set may be used to generate a further training data set of arbitrary size and diversity for training the reconstruction network.

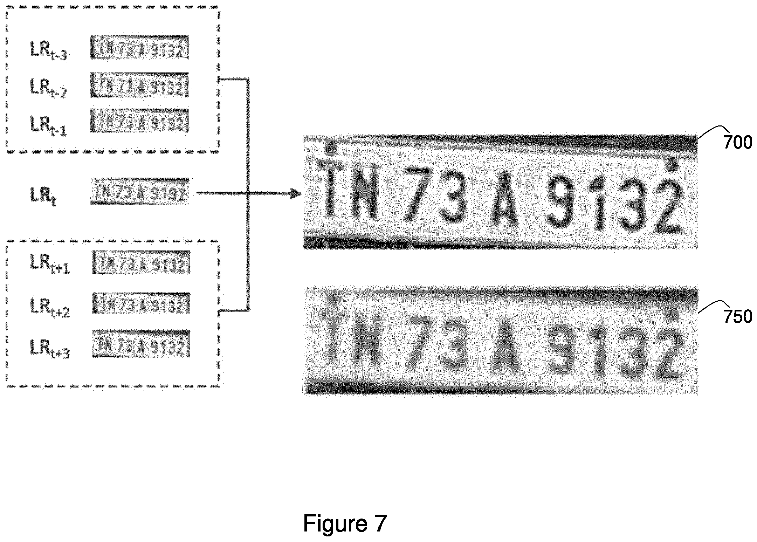

Figure 7 shows an example of a super resolution image generated using the systems and methods described herein.

In figure 7 there is shown a plurality of images of an object ($LR_{t-3}$, $LR_{t-2}$, $LR_{t-1}$, $LR_t$, $LR_{t+1}$, $LR_{t+2}$, $LR_{t+3}$) which have been extracted from a plurality of frames of a video. The object shown is a license plate of a vehicle. A target image ($LR_t$) is selected and a super resolution version (700) of the target image generated using the plurality of images of the object ($LR_{t-3}$, $LR_{t-2}$, $LR_{t-1}$, $LR_t$, $LR_{t+1}$, $LR_{t+2}$, $LR_{t+3}$). In this example the YOLOX object detection algorithm was used to generate the plurality of images of the object ($LR_{t-3}$, $LR_{t-2}$, $LR_{t-1}$, $LR_t$, $LR_{t+1}$, $LR_{t+2}$, $LR_{t+3}$). The RBPN network was used as the reconstruction neural network, trained as discussed above. The RAFT network was used as the correspondence estimation neural network, trained as set out above.

For comparison an image of the object generated using bi-cubic interpolation of the target image is provided in figure 7. As can clearly be seen the resolution of the image generated using the systems and method described herein is improved in relation to the bi-cubic interpolation.

It will be appreciated that the methods described have been shown as individual steps carried out in a specific order. However, the skilled person will appreciate that these steps may be combined or carried out in a different order whilst still achieving the desired result.

It will be appreciated that embodiments of the invention may be implemented using a variety of different information processing systems. In particular, although the figures and the discussion thereof provide an exemplary computing system and methods, these are presented merely to provide a useful reference in discussing various aspects of the invention. Embodiments of the invention may be carried out on any suitable data processing device, such as a personal computer, laptop, personal digital assistant, mobile telephone, set top box, television, server computer, etc. Of course, the description of the systems and methods has been simplified for purposes of discussion, and they are just one of many different types of system and method that may be used for embodiments of the invention. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more field-programmable-gate-arrays (FPGAs), and/or one or more application-specific-integrated-circuits (ASICs), and/or one or more digital-signal-processors (DSPs), and/or other hardware arrangements. Method steps implemented in flowcharts contained herein, or as described above, may each be implemented by corresponding respective modules; multiple method steps implemented in flowcharts contained herein, or as described above, may be implemented together by a single module.

It will be appreciated that, insofar as embodiments of the invention are implemented by a computer program, then a storage medium and a transmission medium carrying the computer program form aspects of the invention. The computer program may have one or more program instructions, or program code, which, when executed by a computer carries out an embodiment of the invention. The term "program" as used herein, may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a BluRay disc), or a memory (such as a ROM, a RAM, EEPROM, EPROM, Flash memory or a portable/removable memory device), etc. The transmission medium may be a communications signal, a data broadcast, a communications link between two or more computers, etc.

Further example implementations are provided in the following numbered clauses.

1. A method of generating a super resolution image of an object, the method comprising:

receiving a plurality of frames of a video of the object;
extracting from the plurality of frames a plurality of images of the object; selecting an image of the plurality of images as a target image;

applying a trained model to the plurality of images to generate a super resolution image of the object, wherein the trained model comprises:

(a) a correspondence estimation neural network configured to compute a respective optical flow between the target image and each other image of the plurality, and trained for the object type of the object, and
(b) a reconstruction neural network configured to generate a super resolution version of the target image using the plurality of images and the respective optical flows between the target image and each other image of the plurality.

2. The method of clause 1 wherein the step of extracting comprises applying a trained object detector to the plurality of frames.

3. The method of clause 2 wherein the trained object detector is a You Only Look Once (YOLO) type detector.

4. The method of clause 3 wherein the step of extracting further comprises applying a trained object tracker to identify the same object in each frame from a plurality of objects in one or more frames having a common object type.

5. The method of any preceding clause wherein the correspondence estimation network is a Recurrent All-Pairs Field Transforms (RAFT) neural network

6. A method of training a model for generating super resolution images of an object type, wherein the model comprises a correspondence estimation network and a reconstruction network, the method comprising:

obtaining a set of training data for an object of the object type, the set of training data comprising a plurality of images of the object at different viewpoints and optical flow fields between pairs of images of the plurality;
training the correspondence estimation network using the set of training data, and obtaining a trained reconstruction network.

7. The method of clause 6 wherein the correspondence estimation network is a Recurrent All-Pairs Field Transforms (RAFT) neural network

8. The method of clause 7 wherein the step of training is carried out using a loss function comprising norms of the differences between the optical flows calculated by correspondence estimation network for pairs of images in the set of training data and the corresponding optical flows in the set of training data.

9. The method of clause 8 wherein the loss function takes the form

$$\lambda(I, I') = \sum_{i=1}^{N} \gamma^{N-i} \left\| f_{\mathrm{gt}}(I, I') - f_i(I, I') \right\|_{L1}$$

where $f_{\mathrm{gt}}(I,I')$ is the optical flow field in the set of training data for a pair of images $(I,I')$ of the set of training data, $f_i(I,I')$ is the RAFT or calculated optical flow field at the ith iteration of $N$ total iterations for the pair of images $(I,I')$ and $\gamma < 1$.

10. The method of any one of clauses 6- 9 wherein the step of obtaining a set of training data comprises:

generating, from a digital 3D model of the object of the object type, a plurality of images of the object at respective different viewpoints; and
calculating, using the 3D model, for a plurality of pairs of the images, a respective optical flow field between the images of the pair.

11. The method of any one of clauses 6-10 wherein the step of obtaining a trained reconstruction network comprises: training the reconstruction network using a further set of training data, the further set of training data comprising one or more images of an object of the object type at the super resolution and a plurality of images of the object at resolutions lower than the super resolution.

12. The method of clause 11 wherein the images in the further set of training data are generated from the images in the initial set of training data.

13. The method of clause 11 or 12 wherein said training the reconstruction network uses the trained correspondence estimation algorithm to compute respective optical flow fields between pairs of the images in the further set of training data.

14. The method of any one of clauses 6-10 wherein the step of obtaining a trained reconstruction network comprises receiving a pre-trained reconstruction network.

15. The method of any preceding clause wherein the reconstruction neural network comprises a recurrent back projection network.

16. The method of any preceding clause wherein the reconstruction network is trained using a loss function comprising a mean squared error loss component and an image perceptual loss component.

17. The method of any preceding clause wherein the object type is any one of:

license plates;
faces;
billboards;
signs.

18. An apparatus arranged to carry out a method according to any one of clauses 1 to 17.

19. A computer-readable medium storing a computer program which, when executed by a processor, causes the processor to carry out a method according to any one of clauses 1 to 17.


**Claims**

1. A method of generating a super resolution image of an object, the method comprising:

receiving a plurality of frames of a video of the object;
extracting from the plurality of frames a plurality of images of the object; selecting an image of the plurality of images as a target image;
applying a trained model to the plurality of images to generate a super resolution image of the object, wherein the trained model comprises:

(a) a correspondence estimation neural network configured to compute a respective optical flow between the target image and each other image of the plurality, and trained for the object type of the object, and
(b) a reconstruction neural network configured to generate a super resolution version of the target image using the plurality of images and the respective optical flows between the target image and each other image of the plurality.

2. The method of claim 1 wherein the step of extracting comprises applying a trained object detector to the plurality of frames, optionally wherein the trained object detector is a You Only Look Once (YOLO) type detector, further optionally wherein the step of extracting further comprises applying a trained object tracker to identify the same object in each frame from a plurality of objects in one or more frames having a common object type.

3. The method of any preceding claim wherein the correspondence estimation network is a Recurrent All-Pairs Field Transforms (RAFT) neural network

4. A method of training a model for generating super resolution images of an object type, wherein the model comprises a correspondence estimation network and a reconstruction network, the method comprising:

obtaining a set of training data for an object of the object type, the set of training data comprising a plurality of images of the object at different viewpoints and optical flow fields between pairs of images of the plurality;
training the correspondence estimation network using the set of training data, and obtaining a trained reconstruction network.

5. The method of claim 4 wherein the correspondence estimation network is a Recurrent All-Pairs Field Transforms (RAFT) neural network

6. The method of claim 5 wherein the step of training is carried out using a loss function comprising norms of the differences between the optical flows calculated by correspondence estimation network for pairs of images in the set of training data and the corresponding optical flows in the set of training data.

7. The method of claim 6 wherein the loss function takes the form

$$\lambda(I, I') = \sum_{i=1}^{N} \gamma^{N-i} \left\| f_{\text{gt}}(I, I') - f_i(I, I') \right\|_{L1}$$

where $f_{\text{gt}}(I,I')$ is the optical flow field in the set of training data for a pair of images $(I,I')$ of the set of training data, $f_i(I,I')$ is the RAFT or calculated optical flow field at the ith iteration of $N$ total iterations for the pair of images $(I,I')$ and $\gamma < 1$.

8. The method of any one of claims 4-7 wherein the step of obtaining a set of training data comprises:

   generating, from a digital 3D model of the object of the object type, a plurality of images of the object at respective different viewpoints; and
   calculating, using the 3D model, for a plurality of pairs of the images, a respective optical flow field between the images of the pair.

9. The method of any one of claims 4-8 wherein the step of obtaining a trained reconstruction network comprises: training the reconstruction network using a further set of training data, the further set of training data comprising one or more images of an object of the object type at the super resolution and a plurality of images of the object at resolutions lower than the super resolution, optionally, wherein the images in the further set of training data are generated from the images in the initial set of training data.

10. The method of claim 9 wherein said training the reconstruction network uses the trained correspondence estimation algorithm to compute respective optical flow fields between pairs of the images in the further set of training data.

11. The method of any one of claims 4-8 wherein the step of obtaining a trained reconstruction network comprises receiving a pre-trained reconstruction network.

12. The method of any preceding claim wherein the reconstruction neural network comprises a recurrent back projection network and/or wherein the reconstruction network is trained using a loss function comprising a mean squared error loss component and an image perceptual loss component.

13. The method of any preceding claim wherein the object type is any one of:

   license plates;
   faces;
   billboards;
   signs.

14. An apparatus arranged to carry out a method according to any one of claims 1 to 13.

15. A computer-readable medium storing a computer program which, when executed by a processor, causes the processor to carry out a method according to any one of claims 1 to 13.

Figure 1a

Figure 1b

Figure 2a

200

- 210 receiving a plurality of frames of a video of the object
- 220 extracting from the plurality of frames a plurality of images of the object
- 230 selecting an image of the plurality of images as a target image
- 240 applying a trained model to the plurality of images to generate a super resolution version of the target image

Figure 2b

220

- 222 identifying one or more objects of a given object type the plurality of frames
- 224 tracking a selected one of the objects across the plurality of frames
- 226 cropping from each frame containing the tracked object an image of the tracked object

Figure 3

Figure 4

obtaining a set of training data for
an object of the object type

510

training the correspondence
estimation network using the set of
training data

520

obtaining a trained reconstruction
network

530

500

**Figure 5**

generating, from a digital 3D model
of the object of the object type, a
plurality of images of the object at
respective different viewpoints

512

calculating, using the 3D model, for
a plurality of pairs of the images, a
respective optical flow field between
the images of the pair

514

510

**Figure 6**

Figure 7

# EUROPEAN SEARCH REPORT

Application Number

EP 23 19 8031

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 107 480 772 A (UNIV ZHEJIANG) 15 December 2017 (2017-12-15) * paragraph [0008] – paragraph [0039] * * claim 1 * | 1-3, 13-15 | INV. G06T3/4053 |
| X | CHOI JINSOO ET AL: "Joint Video Super-Resolution and Frame Interpolation via Permutation Invariance", SENSORS, vol. 23, no. 5, 24 February 2023 (2023-02-24), page 2529, XP93133967, CH ISSN: 1424-8220, DOI: 10.3390/s23052529 | 4-12 | |
| Y | * abstract * * sections 3-5 * * figure 1 * | 1-3, 13-15 | |
| A,D | TEED ZACHARY ET AL: "RAFT: Recurrent All-Pairs Field Transforms for Optical Flow", 3 November 2020 (2020-11-03), TOPICS IN CRYPTOLOGY – CT-RSA 2020 : THE CRYPTOGRAPHERS' TRACK AT THE RSA CONFERENCE 2020, SAN FRANCISCO, CA, USA, FEBRUARY 24-28, 2020, PAGE(S) 402 – 419, XP047572216, * the whole document * | 1-15 | |

TECHNICAL FIELDS
SEARCHED (IPC)

G06T

The present search report has been drawn up for all claims

| Place of search | Date of completion of the search | Examiner |
|---|---|---|
| Munich | 26 February 2024 | Katartzis, Antonios |

## ANNEX TO THE EUROPEAN SEARCH REPORT
## ON EUROPEAN PATENT APPLICATION NO.

**EP 23 19 8031**

This annex lists the patent family members relating to the patent documents cited in the above-mentioned European search report.
The members are as contained in the European Patent Office EDP file on
The European Patent Office is in no way liable for these particulars which are merely given for the purpose of information.

**26-02-2024**

| Patent document cited in search report | Publication date | Patent family member(s) | Publication date |
|---|---|---|---|
| CN 107480772 A | 15-12-2017 | NONE | |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GE et al.** YOLOX: Exceeding YOLO Series in 2021. *arXiv:2107.08430*, 2017, https://doi.org/10.48550/arXiv.2107.08430
- **YANG et al.** ByteTrack: Multi-Object Tracking by Associating Every Detection Box. *arXiv:2110.06864*, 2022, https://doi.org/10.48550/arXiv.2110.06864
- **HARIS et al.** Recurrent BackProjection Network for Video Super-Resolution. *arXiv:1903.10128*, 2019, https://doi.org/10.48550/arXiv.1903.10128
- **XUE, T.** ; **CHEN, B.** ; **WU, J. et al.** Video Enhancement with Task-Oriented Flow. *Int J Comput Vis*, 2019, vol. 127, 1106-1125, https://doi.org/10.1007/s11263-018-01144-2
- **LEDIG et al.** Photo-Realistic Single Image Super-Resolution Using a Generative Adversarial Network. *arXiv:1609.04802*, 2017, https://doi.org/10.48550/arXiv.1609.04802
- **A GEIGER** ; **P LENZ** ; **C STILLER** ; **R URTASUN**. Vision meets robotics: The KITTI dataset. *Int. J. Rob. Res.*, September 2013, vol. 32 (11), 1231-1237, https://doi.org/10.1177/0278364913491297
- **ZACHARY TEED** ; **JIA DENG**. RAFT: Recurrent All-Pairs Field Transforms for Optical Flow. *arXiv:2003.12039*, 2020, https://doi.org/10.48550/arXiv.2003.12039